(19) Europäisches Patentamt / European Patent Office / Office européen des brevets

(11) **EP 3 252 611 A1**

(12) **EUROPEAN PATENT APPLICATION**
published in accordance with Art. 153(4) EPC

(43) Date of publication:
**06.12.2017  Bulletin 2017/49**

(51) Int Cl.:
***G06F 12/08*** (2016.01)

(21) Application number: **16754765.2**

(86) International application number:
**PCT/CN2016/074450**

(22) Date of filing: **24.02.2016**

(87) International publication number:
**WO 2016/134656 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.02.2015  CN 201510092224**

(71) Applicant: **Huawei Technologies Co., Ltd.**
**Longgang District**
**Shenzhen, Guangdong 518129 (CN)**

(72) Inventors:
• **WANG, Chenxi**
  **Beijing 100190 (CN)**
• **LV, Fang**
  **Beijing 100190 (CN)**
• **FENG, Xiaobing**
  **Beijing 100190 (CN)**
• **LIU, Ying**
  **Beijing 100190 (CN)**

(74) Representative: **Thun, Clemens**
**Mitscherlich PartmbB**
**Patent- und Rechtsanwälte**
**Sonnenstraße 33**
**80331 München (DE)**

(54) **METHOD AND DEVICE FOR ALLOCATING HARDWARE ACCELERATION INSTRUCTIONS TO MEMORY CONTROLLER**

(57)    Embodiments of the present invention provide a method and an apparatus for allocating a hardware acceleration instruction to a memory controller. The method includes the following steps. dividing multiple hardware acceleration instructions into different instruction sets according to dependency relationships among the multiple hardware acceleration instructions; obtaining a first mapping relationship between the instruction sets and memory controllers in a computer system according to a rule that different instruction sets whose hardware acceleration instructions do not have a dependency relationship are allocated to different memory controllers; adjusting the first mapping relationship according to load information of memory controllers in a first memory controller set, so as to obtain a second mapping relationship between the instruction sets and the memory controllers in the computer system; and allocating hardware acceleration instructions in the instruction sets to memory controllers in a second memory controller set according to the second mapping relationship. Load balancing of memory controllers is implemented when multiple memory controllers in the computer system execute hardware acceleration instructions.

FIG. 1

**Description**

**TECHNICAL FIELD**

Embodiments of the present invention relate to the field of computer technologies, and in particular, to a method and an apparatus for allocating a hardware acceleration instruction to a memory controller.

**BACKGROUND**

A computer system includes two parts: computer hardware and software. The hardware includes a processor, a register, a cache, a memory, an external storage, and the like. The software is running programs of a computer and corresponding documents. When running a program, a computer operating system transmits data related to an instruction in the program to the cache or the register from the memory by using a memory bus. Then, the processor obtains the data to execute the instruction, and further finish running of the program. Therefore, when a program is running, transmission of data related to an instruction in the program is a key factor that restricts a running speed of the program. Currently, to accelerate a running speed of a program, a mainly used method includes a method for accelerating a running speed of a program by increasing a physical bandwidth. For example, memory bus frequency is increased by increasing a transmission rate of a single pin, and memory access channels are increased by increasing a quantity of pins. However, due to a limit of a current packaging technology, it is difficult to expand a pin quantity of a chip on a large scale, and significantly increase a transmission rate of a single pin.

In consideration of the limit of the current packaging technology, and to adapt to applications of cloud computing and big data by increasing an execution speed of a software program, a method for increasing an execution speed of a software program in the prior art may further be specifically: disposing a memory controller between the memory and the cache, and replacing some instructions of large-scale operations in a program with one or more variable-granularity hardware acceleration instructions. Therefore, these hardware acceleration instructions are run by using the memory controller. This effectively reduces data transmission between the memory and the processor, and indirectly improves memory bandwidth usage. In addition, the instructions of large-scale operations in the program less occupy the processor.

However, when the hardware acceleration instruction is run by using the memory controller, load imbalance of multiple memory controllers may be caused. Therefore, performance of the computer operating system is affected, and the applications of the cloud computing and the big data cannot be well adapted.

**SUMMARY**

Embodiments of the present invention provide a method and an apparatus for allocating a hardware acceleration instruction to a memory controller. Load balancing of memory controllers is implemented when multiple memory controllers in a computer system execute hardware acceleration instructions. Therefore, performance of the computer system is improved, and applications of cloud computing and big data are better satisfied.

According to a first aspect, an embodiment of the present invention provides a method for allocating a hardware acceleration instruction to a memory controller, where the method is applied to a computer system, the computer system includes multiple memory controllers that can execute hardware acceleration instructions, and the method includes the following steps.

dividing multiple hardware acceleration instructions into different instruction sets according to dependency relationships among the multiple hardware acceleration instructions, where hardware acceleration instructions that belong to a same instruction set have a single-dependency relationship, and the single-dependency relationship indicates that if input data of one hardware acceleration instruction in the multiple hardware acceleration instructions is output data of another hardware acceleration instruction, the hardware acceleration instruction is singly dependent on the another hardware acceleration instruction;

obtaining a first mapping relationship between the instruction sets and the memory controllers in the computer system according to a rule that different instruction sets whose hardware acceleration instructions do not have a dependency relationship are allocated to different memory controllers, where the dependency relationship indicates that if input data of one hardware acceleration instruction in the multiple hardware acceleration instructions is output data of another one or more hardware acceleration instructions, the hardware acceleration instruction is dependent on the another one or more hardware acceleration instructions, and memory controllers in the first mapping relationship compose a first memory controller set;

adjusting the first mapping relationship according to load information of the memory controllers in the first memory controller set, so as to obtain a second mapping relationship between the instruction sets and the memory controllers in the computer system, where memory controllers in the second mapping relationship compose a second memory controller set, load information of the memory controllers in the second memory controller set is not greater than a first preset threshold, and the load information includes execution time slices of hardware acceleration instructions allocated to the memory controllers in the first memory controller set; and

allocating hardware acceleration instructions in the instruction sets to the memory controllers in the second memory controller set according to the second mapping relationship, where hardware acceleration instructions in a same instruction set are allocated to a same memory controller for execution.

With reference to the first aspect, in a first implementation manner of the first aspect,
the adjusting the first mapping relationship according to load information of the memory controllers in the first memory controller set, so as to obtain a second mapping relationship between the instruction sets and the memory controllers in the computer system specifically includes:

when a proportion of a memory controller, in the first memory controller set, whose load information is greater than the first preset threshold is less than a second preset threshold, randomly allocating an instruction set that is in the first mapping relationship and allocated to the memory controller whose load information is greater than the first preset threshold, to another memory controller, in the computer system, whose load information is less than the first preset threshold, so as to obtain the second mapping relationship between the instruction sets and the memory controllers in the computer system.

With reference to the first aspect, in a second implementation manner of the first aspect,
the adjusting the first mapping relationship according to load information of the memory controllers in the first memory controller set, so as to obtain a second mapping relationship between the instruction sets and the memory controllers in the computer system specifically includes:

when a proportion of a memory controller, in the first memory controller set, whose load information is greater than the first preset threshold is not less than a second preset threshold, obtaining a third memory controller set in the computer system, where load information of memory controllers in the third memory controller set is not greater than the first preset threshold; and
obtaining a second mapping relationship between the instruction sets and the memory controllers in the third memory controller set according to the rule that different instruction sets whose hardware acceleration instructions do not have a dependency relationship are allocated to different memory controllers.

With reference to the first aspect or the first implementation manner of the first aspect or the second implementation manner of the first aspect, in a third implementation manner of the first aspect,
the obtaining a first mapping relationship between the instruction sets and the memory controllers in the computer system specifically includes:

if there are at least two memory controllers that match one instruction set, allocating the instruction set to a memory controller whose load information is the smallest in the at least two memory controllers that match the instruction set.

With reference to the first aspect or the first implementation manner of the first aspect or the second implementation manner of the first aspect, in a fourth implementation manner of the first aspect,
the execution time slice of the hardware acceleration instruction is $latency_i(Fixed_i, Variable_i)=Fixed_i+Variable_i(\alpha_i{}^*data_i/base\_granularity_i)$, $Fixed_i$ is a fixed execution time slice of the hardware acceleration instruction, $Variable_i$ is a variable execution time slice of the hardware acceleration instruction, $\alpha_i$ is a data execution ratio of the hardware acceleration instruction, $data_i$ is a data amount of the hardware acceleration instruction, and $base\_granularity_i$ is a smallest data granularity of the hardware acceleration instruction.

According to a second aspect, an embodiment of the present invention provides an apparatus for allocating a hardware acceleration instruction to a memory controller, where the apparatus is applied to a computer system, the computer system includes multiple memory controllers that can execute hardware acceleration instructions, and the apparatus includes:

a division module, configured to divide multiple hardware acceleration instructions into different instruction sets according to dependency relationships among the multiple hardware acceleration instructions, where hardware acceleration instructions that belong to a same instruction set have a single-dependency relationship, and the single-dependency relationship indicates that if input data of one hardware acceleration instruction in the multiple hardware acceleration instructions is output data of another hardware acceleration instruction, the hardware acceleration instruction is singly dependent on the another hardware acceleration instruction;
an obtaining module, configured to obtain a first mapping relationship between the instruction sets and the memory controllers in the computer system according to a rule that different instruction sets whose hardware acceleration instructions do not have a dependency relationship are allocated to different memory controllers, where the dependency relationship indicates that if input data of one hardware acceleration instruction in the multiple hardware acceleration instructions is output data of another one or more hardware acceleration instructions, the hardware acceleration instruction is dependent on the another one or more hardware acceleration instructions, and memory controllers in the first mapping relationship compose a first memory controller set;

an adjustment module, configured to adjust the first mapping relationship according to load information of the memory controllers in the first memory controller set, so as to obtain a second mapping relationship between the instruction sets and the memory controllers in the computer system, where memory controllers in the second mapping relationship compose a second memory controller set, load information of the memory controllers in the second memory controller set is not greater than a first preset threshold, and the load information includes execution time slices of hardware acceleration instructions allocated to the memory controllers in the first memory controller set; and

an allocation module, configured to allocate hardware acceleration instructions in the instruction sets to the memory controllers in the second memory controller set according to the second mapping relationship, where hardware acceleration instructions in a same instruction set are allocated to a same memory controller for execution.

With reference to the second aspect, in a first implementation manner of the second aspect, the adjustment module is specifically configured to:

when a proportion of a memory controller, in the first memory controller set, whose load information is greater than the first preset threshold is less than a second preset threshold, randomly allocate an instruction set that is in the first mapping relationship and allocated to the memory controller whose load information is greater than the first preset threshold, to another memory controller, in the computer system, whose load information is less than the first preset threshold, so as to obtain the second mapping relationship between the instruction sets and the memory controllers in the computer system.

With reference to the second aspect, in a second implementation manner of the second aspect, the adjustment module is specifically configured to:

when a proportion of a memory controller, in the first memory controller set, whose load information is greater than the first preset threshold is not less than a second preset threshold, obtain a third memory controller set in the computer system, where load information of memory controllers in the third memory controller set is not greater than the first preset threshold; and obtain a second mapping relationship between the instruction sets and the memory controllers in the third memory controller set according to the rule that different instruction sets whose hardware acceleration instructions do not have a dependency relationship are allocated to different memory controllers.

With reference to the second aspect or the first implementation manner of the second aspect or the second implementation manner of the second aspect, in a third implementation manner of the second aspect, the obtaining module is specifically configured to:

if there are at least two memory controllers that match one instruction set, allocate the instruction set to a memory controller whose load information is the smallest in the at least two memory controllers that match the instruction set.

With reference to the second aspect or the first implementation manner of the second aspect or the second implementation manner of the second aspect, in a fourth implementation manner of the second aspect, the execution time slice of the hardware acceleration instruction is $latency_i(Fixed_i, Variable_i) = Fixed_i + Variable_i(\alpha_i * data_i / base\_granularity_i)$, $Fixed_i$ is a fixed execution time slice of the hardware acceleration instruction, $Variable_i$ is a variable execution time slice of the hardware acceleration instruction, $\alpha_i$ is a data execution ratio of the hardware acceleration instruction, $data_i$ is a data amount of the hardware acceleration instruction, and $base\_granularity_i$ is a smallest data granularity of the hardware acceleration instruction.

According to the method and the apparatus for allocating a hardware acceleration instruction provided in the embodiments of the present invention, multiple hardware acceleration instructions are divided into different instruction sets according to dependency relationships among the multiple hardware acceleration instructions. Hardware acceleration instructions that belong to a same instruction set have a single-dependency relationship, and the single-dependency relationship indicates that if input data of one hardware acceleration instruction in the multiple hardware acceleration instructions is output data of another hardware acceleration instruction, the hardware acceleration instruction is singly dependent on the another hardware acceleration instruction. A first mapping relationship between the instruction sets and memory controllers in a computer system is obtained according to a rule that different instruction sets whose hardware acceleration instructions do not have a dependency relationship are allocated to different memory controllers. The dependency relationship indicates that if input data of one hardware acceleration instruction in the multiple hardware acceleration instructions is output data of another one or more hardware acceleration instructions, the hardware acceleration instruction is dependent on the another one or more hardware acceleration instructions, and memory controllers in the first mapping relationship compose a first memory controller set. The first mapping relationship is adjusted according to load information of the memory controllers in the first memory controller set, so as to obtain a second mapping relationship between the instruction sets and the memory controllers in the computer system. Memory controllers in the second mapping relationship compose a second memory controller set, load information of the memory controllers in the second memory controller set is not greater than a first preset threshold, and the load information includes execution time slices of hardware acceleration instructions allocated to the memory controllers in the first memory controller set. Hardware acceleration instructions in the instruction sets are allocated to the memory controllers in the second memory controller set according to the second mapping relationship. Hardware acceleration instructions in a same instruction set are allocated to a same memory controller for execution. Load balancing of memory controllers is implemented when multiple memory controllers in the computer system execute hardware acceleration instructions. Therefore, performance of the computer system is improved, and applications of cloud computing and big data are better satisfied.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description are merely accompanying drawings of some embodiments of the present invention.

FIG. 1 is a flowchart of a method for allocating a hardware acceleration instruction to a memory controller according to an embodiment of the present invention;
FIG. 2 is a schematic diagram of dependency relationships among multiple hardware acceleration instructions according to an embodiment of the present invention;
FIG. 3A and FIG. 3B are a flowchart of another method for allocating a hardware acceleration instruction to a memory controller according to an embodiment of the present invention; and
FIG. 4 is a schematic structural diagram of an apparatus for allocating a hardware acceleration instruction to a memory controller according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention.

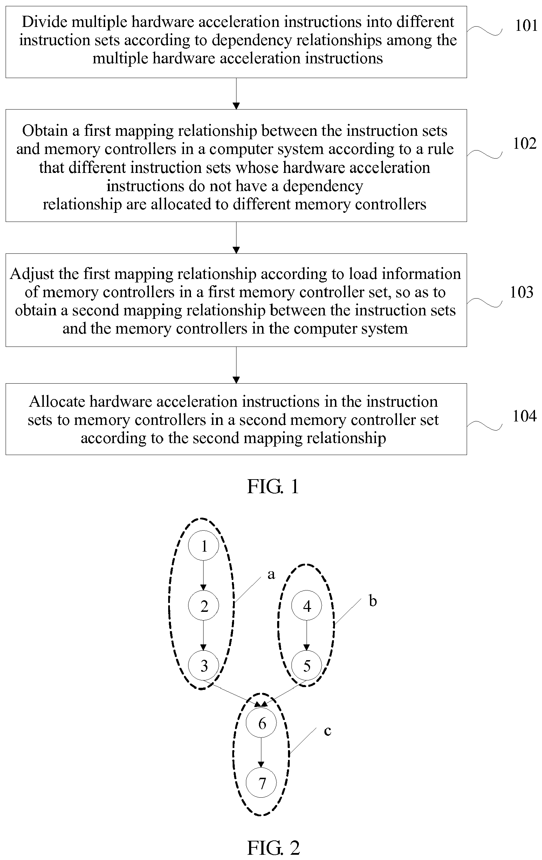

FIG. 1 is a flowchart of a method for allocating a hardware acceleration instruction to a memory controller according to an embodiment of the present invention. As shown in FIG. 1, this embodiment is executed by a computer. The method is applied to a computer system, and the computer system includes multiple memory controllers that can execute hardware acceleration instructions. Specifically, the method may be implemented in a manner of hardware or a combination of software and hardware. The method includes the following steps.

Step 101: Divide multiple hardware acceleration instructions into different instruction sets according to dependency relationships among the multiple hardware acceleration instructions.

In this embodiment, a hardware acceleration instruction refers to an instruction, in a program, that can be independently executed on the memory controller. The hardware acceleration instruction is generally an instruction, in a program, that requires a large-scale operation and a small computing amount. For example, a matrix transpose instruction, a matrix reset instruction, and a variable-granularity read/write instruction in a form of a message packet.

In this embodiment, before an instruction in a program is executed, when performing static compilation on the program, a compiler uses a conventional compiling identification method, and identifies multiple hardware acceleration instructions in the program.

After the compiler identifies the multiple hardware acceleration instructions in the program, the multiple hardware acceleration instructions are divided into different instruction sets according to dependency relationships among the multiple hardware acceleration instructions.

The dependency relationship indicates that if input data of one hardware acceleration instruction in multiple hardware acceleration instructions is output data of another one or more hardware acceleration instructions, the hardware acceleration instruction is dependent on the another one or more hardware acceleration instructions.

The dependency relationship includes a single-dependency relationship and a multiple-dependency relationship. If input data of one hardware acceleration instruction in multiple hardware acceleration instructions is output data of another hardware acceleration instruction, the hardware acceleration instruction is singly dependent on the another hardware acceleration instruction. This dependency relationship is a single-dependency relationship. If input data of one hardware acceleration instruction in multiple hardware acceleration instructions is output data of multiple other hardware acceleration instructions, the hardware acceleration instruction is multiply dependent on the multiple other hardware acceleration instructions. This dependency relationship is a multiple-dependency relationship.

If there is a dependency relationship among hardware acceleration instructions, one or more hardware acceleration instructions on which one hardware acceleration instruction is dependent are parent hardware acceleration instructions, and the dependent hardware acceleration instruction is a son hardware acceleration instruction. When a program is being executed, parent hardware acceleration instructions are executed before a son hardware acceleration instruction. Therefore, when multiple hardware acceleration instructions in the program are allocated to the memory controllers in the computer system, the parent hardware acceleration instructions are first allocated, and then the son hardware acceleration instruction is allocated.

In this embodiment, when executing hardware acceleration instructions, the memory controllers execute parent hardware acceleration instructions before a son hardware acceleration instruction. Therefore, when multiple hardware acceleration instructions are being allocated to the memory controllers, hardware acceleration instructions that have a single-dependency relationship may be allocated to a same memory controller for execution. Therefore, in this embodiment, multiple hardware acceleration instructions are divided into different instruction sets according to dependency relationships among the multiple hardware acceleration instructions.

Hardware acceleration instructions that belong to a same instruction set have a single-dependency relationship. Therefore, hardware acceleration instructions in different instruction sets have two sorts of relationships. The first relationship is that the hardware acceleration instructions in different instruction sets do not have a dependency relationship. The other relationship is that the hardware acceleration instructions in different instruction sets have a multiple-dependency relationship.

FIG. 2 is a schematic diagram of dependency relationships among multiple hardware acceleration instructions according to an embodiment of the present invention. As shown in FIG. 2, the program includes seven hardware acceleration instructions in total. If there is one arrow between hardware acceleration instructions, it indicates that the hardware acceleration instructions have a single-dependency relationship. If there are multiple arrows between hardware acceleration instructions, it indicates that the hardware acceleration instructions have a multiple-dependency relationship. A hardware acceleration instruction from which an arrow extends is a parent hardware acceleration instruction, and a hardware acceleration instruction to which an arrow points is a son hardware acceleration instruction. In FIG. 2, hardware acceleration instructions 1, 2, and 3 have a single-dependency relationship, and compose an instruction set a. Hardware acceleration instructions 4 and 5 have a single-dependency relationship, and compose an instruction set b. Hardware acceleration instructions 6 and 7 have a single-dependency relationship, and compose an instruction set c. Hardware acceleration instructions that are in the instruction set a and the instruction set b do not have a dependency relationship. The hardware acceleration instruction 6 in the instruction set c, the hardware acceleration instruction 3 in the instruction set a, and the hardware acceleration instruction 5 in the instruction set b have a multiple-dependency relationship.

Step 102: Obtain a first mapping relationship between the instruction sets and the memory controllers in the computer system according to a rule that different instruction sets whose hardware acceleration instructions do not have a dependency relationship are allocated to different memory controllers.

In this embodiment, after the multiple hardware acceleration instructions are divided into different instruction sets, when the multiple instruction sets are being allocated, if hardware acceleration instructions in different instruction sets do not have a dependency relationship, it indicates that the hardware acceleration instructions in the different instruction set do not have a time sequence relationship and can be concurrently executed in the memory controllers in the computer system. Therefore, to reduce an execution time, in the memory controllers of the computer system, of hardware acceleration instructions in a program, different instruction sets are allocated to the memory controllers in the computer system according to the rule that different instruction sets whose hardware acceleration instructions do not have a dependency relationship are allocated to different memory controllers, so as to obtain the first mapping relationship between the instruction sets and the memory controllers in the computer system.

In the foregoing example, when the first mapping relationship between the instruction sets and the memory controllers in the computer system is obtained according to the rule that different instruction sets whose hardware acceleration instructions do not have a dependency relationship are allocated to different memory controllers, the instruction set a and the instruction set b are allocated to different memory controllers. The instruction set c may be allocated to a memory controller same as that of the instruction set a or the instruction set b, or the instruction set c may be allocated to a memory controller different from that of the instruction set a and the instruction set b.

Memory controllers in the obtained first mapping relationship between the instruction sets and the memory controllers in the computer system compose a first memory controller set. The first memory controller set may be a part or all of the memory controllers in the computer system. If a quantity of the instruction sets is less than a quantity of the memory controllers, the first memory controller set includes a part of the memory controllers in the computer system. If a quantity of the instruction sets is not less than a quantity of the memory controllers, the first memory controller set in the first mapping relationship between the instruction sets and the memory controllers in the computer system includes a part or all of the memory controllers in the computer system, where the first mapping relationship is obtained according to the rule that different instruction sets whose hardware acceleration instructions do not have a dependency relationship are allocated to different memory controllers.

Step 103: Adjust the first mapping relationship according to load information of memory controllers in a first memory controller set, so as to obtain a second mapping relationship between the instruction sets and the memory controllers in the computer system.

In this embodiment, when the first mapping relationship between the instruction sets and the memory controllers in the computer system is obtained, to reduce execution time slices of hardware acceleration instructions allocated to all memory controllers in the first memory controller set, the followed rule does not fully consider whether the execution time slices of the hardware acceleration instructions allocated to the memory controllers in the first memory controller set are balanced. Therefore, after the first mapping relationship is obtained, the first mapping relationship is adjusted according to the load information of the memory controllers in the first memory controller set, so as to obtain the second mapping relationship between the instruction sets and the memory controllers in the computer system.

After the first mapping relationship is adjusted, memory controllers in the second mapping relationship compose a second memory controller set. Load information of the memory controllers in the second memory controller set is not greater than a first preset threshold.

In this embodiment, the first preset threshold may be preset according to the load information of the memory controllers in the first memory controller set before the hardware acceleration instruction in the program is executed.

The load information includes execution time slices of hardware acceleration instructions allocated to the memory controllers in the first memory controller set.

Step 104: Allocate hardware acceleration instructions in the instruction sets to memory controllers in a second memory controller set according to the second mapping relationship.

In this embodiment, hardware acceleration instructions in a same instruction set have a single-dependency relationship, that is, the hardware acceleration instructions in the same instruction set have a time sequence relationship that a parent hardware acceleration instruction is executed before a son hardware acceleration instruction. Therefore, the hardware acceleration instructions in the same instruction set are allocated to a same memory controller for execution.

In this embodiment, the hardware acceleration instructions in the instruction sets are allocated to the memory controllers in the second memory controller set according to the second mapping relationship. The memory controllers in the second memory controller set execute the hardware acceleration instructions according to an allocation sequence.

In this embodiment, multiple hardware acceleration instructions are divided into different instructions sets according to dependency relationships among the multiple hardware acceleration instructions. A first mapping relationship between the instruction sets and memory controllers in a computer system is obtained according to a rule that different instruction sets whose hardware acceleration instructions do not have a dependency relationship are allocated to different memory controllers. The first mapping relationship is adjusted according to load information of memory controllers in a first memory controller set, so as to obtain a second mapping relationship between the instruction sets and the memory controllers in the computer system. Memory controllers in the second mapping relationship compose a second memory controller set. Load information of the memory controllers in the second memory controller set is not greater than a first preset threshold. Hardware acceleration instructions in the instruction sets are allocated to the memory controllers in the second memory controller set according to the second mapping relationship. The first mapping relationship is adjusted, and the load information of the memory controllers in the obtained second mapping relationship is not greater than the first preset threshold. Therefore, when the hardware acceleration instructions in the instruction sets are executed according to the second mapping relationship, load balancing of the memory controllers in the computer system is implemented, performance of a computer operating system is further improved, and applications of cloud computing and big data are better satisfied.

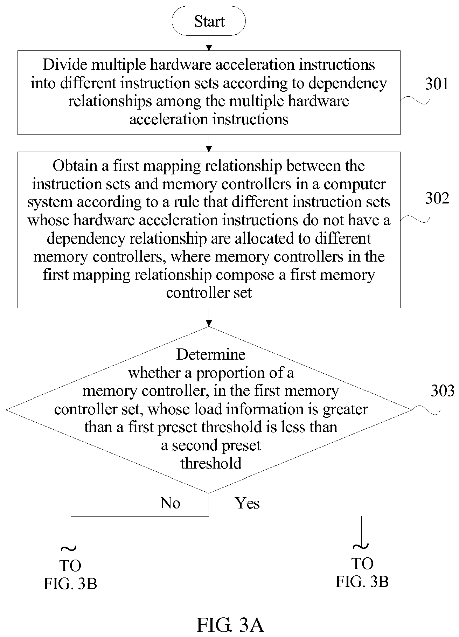

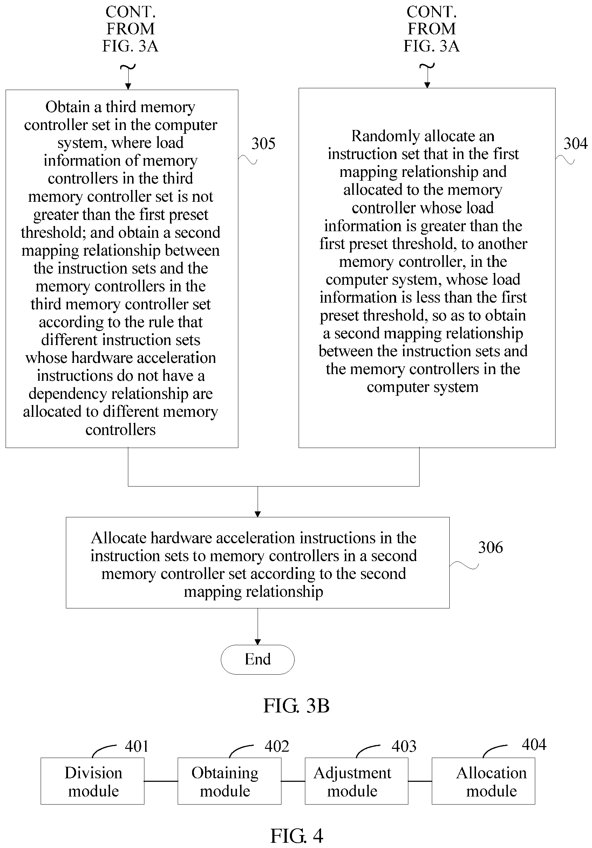

FIG. 3A and FIG. 3B are a flowchart of another method for allocating a hardware acceleration instruction to a memory controller according to an embodiment of the present invention. As shown in FIG. 3A and FIG. 3B, this embodiment is executed by a computer. The method is applied to a computer system, and the computer system includes multiple memory controllers that can execute hardware acceleration instructions. Specifically, the method may be implemented in a manner of hardware or a combination of software and hardware. The method includes the following steps.

Step 301: Divide multiple hardware acceleration instructions into different instruction sets according to dependency relationships among the multiple hardware acceleration instructions.

Hardware acceleration instructions that belong to a same instruction set have a single-dependency relationship. The single-dependency relationship indicates that if input data of one hardware acceleration instruction in multiple hardware acceleration instructions is output data of another hardware acceleration instruction, the hardware acceleration instruction is singly dependent on the another hardware acceleration instruction.

In this embodiment, step 301 is the same as step 101 in Embodiment 1 of the method for allocating a hardware acceleration instruction to a memory controller in the present invention, and is not repeatedly described herein.

Step 302: Obtain a first mapping relationship between the instruction sets and the memory controllers in the computer system according to a rule that different instruction sets whose hardware acceleration instructions do not have a dependency relationship are allocated to different memory controllers. Memory controllers in the first mapping relationship compose a first memory controller set.

In this embodiment, the first memory controller set may be a part or all of the memory controllers in the computer system. If a quantity of the instruction sets is less than a quantity of the memory controllers, the first memory controller set includes a part of the memory controllers in the computer system; or if a quantity of the instruction sets is not less than a quantity of the memory controllers, the first memory controller set in the first mapping relationship between the instruction sets and the memory controllers in the computer system includes a part or all of the memory controllers in the computer system, where the first mapping relationship is obtained according to the rule that different instruction sets whose hardware acceleration instructions do not have a dependency relationship are allocated to different memory controllers.

Further, in this embodiment, when the first mapping relationship between the instruction sets and the memory controllers in the computer system is obtained, if there are at least two memory controllers that match one instruction set, the instruction set is allocated to a memory controller whose load information is the smallest in the at least two memory controllers that match the instruction set.

In this embodiment, when the first mapping relationship between the instruction sets and the memory controllers in the computer system is obtained according to the rule that different instruction sets whose hardware acceleration instructions do not have a dependency relationship are allocated to different memory controllers, if there are at least two memory controllers that match one instruction set, the instruction set is allocated to a memory controller whose load information is the smallest in the at least two memory controllers that match the instruction set. The memory controllers in the first memory controller set are load-balanced as much as possible while load information of the memory controllers in the first memory controller set is reduced.

The load information includes execution time slices of hardware acceleration instructions allocated to the memory controllers in the first memory controller set.

Further, in this embodiment, because specific operations and computing data of multiple hardware acceleration instructions in a program are different, an execution time slice of each hardware acceleration instruction is also different.

Specifically, an execution time slice $latency_i(Fixed_i, Variable_i)$ of a hardware acceleration instruction may be indicated by formula (1):

$$latency_i(Fixed_i, Variable_i) = Fixed_i + Variable_i(\alpha_i * data_i / base\_granularity_i) \qquad (1)$$

where $Fixed_i$ is a fixed execution time slice of an $i^{th}$ hardware acceleration instruction, and indicates a time slice required for parsing and scheduling the hardware acceleration instruction. Because time slices for parsing and scheduling all hardware acceleration instructions are approximately equal, fixed execution time slices of all the hardware acceleration instructions are approximately equal. In this embodiment, the fixed execution time slices of all the hardware acceleration instructions may be set to a same value.

$Variable_i$ is a variable execution time slice of the hardware acceleration instruction. Each hardware acceleration instruction has a different variable execution time. For example, if a hardware acceleration instruction is a read instruction, a variable execution time slice of the hardware acceleration instruction is much affected by a data amount of the read instruction and a smallest data granularity of the read instruction. For another example, if a hardware acceleration instruction is a matrix transpose instruction, a variable execution time slice of the hardware acceleration instruction is affected by a data amount of a matrix and a smallest data granularity during matrix transposition, and is also affected by a data execution rate. For a different hardware acceleration instruction, a variable execution time slice of the hardware acceleration instruction is computed according to a data execution rate $\alpha_i$ of the hardware acceleration instruction, a data amount $data_i$ of the hardware acceleration instruction, and a smallest data granularity $base\_granularity_i$ of the hardware acceleration instruction.

In this embodiment, an execution time slice of each hardware acceleration instruction is a sum of a fixed execution time slice and a variable execution time slice of the hardware acceleration instruction.

In this embodiment, load information allocated to the memory controllers in the computer system can be accurately computed according to the execution time slices of all the hardware acceleration instructions. Further, when the hardware acceleration instructions in the instruction sets are allocated to the memory controllers in the computer system, and the memory controllers execute the hardware acceleration instructions, a load-balancing level of the memory controllers is further improved.

Step 303: Determine whether a proportion of a memory controller, in the first memory controller set, whose load information is greater than a first preset threshold is less than a second preset threshold, and if yes, execute step 304; or if no, execute step 305.

In this embodiment, the first preset threshold may be preset according to the load information of the memory controllers in the first memory controller set before the hardware acceleration instruction in the program is executed. The second preset threshold may be preset, for example, 2/5, or may be another threshold. This is not limited in this embodiment.

Step 304: Randomly allocate an instruction set that is in the first mapping relationship and allocated to the memory controllers whose load information is greater than the first preset threshold, to another memory controller, in the computer system, whose load information is less than the first preset threshold, so as to obtain a second mapping relationship between the instruction sets and the memory controllers in the computer system.

In this embodiment, when the proportion of the memory controller, in the first memory controller set, whose load information is greater than the first preset threshold is less than the second preset threshold, it indicates that, if there are at least two memory controllers that match one instruction set, according to the rule that different instruction sets whose hardware acceleration instructions do not have a dependency relationship are allocated to different memory controllers, the instruction set is allocated to a memory controller whose load information is the smallest in the at least two memory controllers that match the instruction set. In the obtained first mapping relationship between the instruction sets and the memory controllers in the computer system, load of the memory controllers in the first memory controller set is relatively balanced. In order that no instruction set is allocated anymore to the memory controller whose load information is greater that the first preset threshold, the instruction set that is in the first mapping relationship and allocated to the memory controller whose load information is greater than the first preset threshold is randomly allocated to another memory controller, in the computer system, whose load information is less than the first preset threshold, so as to obtain the second mapping relationship between the instruction sets and the memory controllers in the computer system.

Step 305: Obtain a third memory controller set in the computer system, where load information of memory controllers in the third memory controller set is not greater than the first preset threshold; and obtain a second mapping relationship between the instruction sets and the memory controllers in the third memory controller set according to the rule that different instruction sets whose hardware acceleration instructions do not have a dependency relationship are allocated to different memory controllers.

In this embodiment, when the proportion of the memory controller, in the first memory controller set, whose load information is greater than the first preset threshold is not less than the second preset threshold, it indicates that, if there are at least two memory controllers that match one instruction set, according to the rule that different instruction sets whose hardware acceleration instructions do not have a dependency relationship are allocated to different memory controllers, the instruction set is allocated to a memory controller whose load information is the smallest in the at least two memory controllers that match the instruction set. In the obtained first mapping relationship between the instruction sets and the memory controllers in the computer system, a load balancing effect of the memory controllers in the first memory controller set is not good. To ensure load balancing of the memory controllers in the computer system, memory controllers, in the computer system, whose load information is not greater than the first preset threshold are obtained, and the memory controllers, in the computer system, whose load information is not greater than the first preset threshold compose the third memory controller set.

After the third memory controller set in the computer system is obtained, the second mapping relationship between the instruction sets and the memory controllers in the third memory controller set is obtained according to the rule that different instruction sets whose hardware acceleration instructions do not have a dependency relationship are allocated to different memory controllers.

Further, in this embodiment, when the second mapping relationship between the instruction sets and the memory controllers in the third memory controller set is obtained, if there are at least two memory controllers that match one instruction set, the instruction set is allocated to a memory controller whose load information is the smallest in the at least two memory controllers that match the instruction set.

Step 306: Allocate hardware acceleration instructions in the instruction sets to memory controllers in a second memory controller set according to the second mapping relationship.

In this embodiment, hardware acceleration instructions in a same instruction set have a single-dependency relationship, that is, the hardware acceleration instructions in the same instruction set have a time sequence relationship that a parent hardware acceleration instruction is executed before a son hardware acceleration instruction. Therefore, the hardware acceleration instructions in the same instruction set are allocated to a same memory controller for execution.

In this embodiment, when a first mapping relationship between instruction sets and memory controllers in a computer system is obtained, if there are at least two memory controllers that match one instruction set, the instruction set is allocated to a memory controller whose load information is the smallest in the at least two memory controllers that match the instruction set. This improves a load balancing level of memory controllers in a first memory controller set of the obtained first mapping relationship. In addition, when a proportion of a memory controller, in the first memory controller set, whose load information is greater than a first preset threshold is less than a second preset threshold, an instruction set that is in the first mapping relationship and allocated to the memory controller whose load information is greater than the first preset threshold is randomly allocated to another memory controller, in the computer system, whose load information is less than the first preset threshold. When a proportion of a memory controller, in the first memory controller set, whose load information is greater than a first preset threshold is not less than a second preset threshold, a second mapping relationship between the instruction sets and memory controllers in a third memory controller set is obtained according to a rule that different instruction sets whose hardware acceleration instructions do not have a dependency relationship are allocated to different memory controllers, so that load information of memory controllers in the second mapping relationship is not greater than the first preset threshold. Therefore, in this embodiment, when multiple hardware acceleration instructions are allocated to the memory controllers in the computer system, two time slices of load balancing processing is performed successively, so that when multiple memory controllers in the computer system execute hardware acceleration instructions, the memory controllers are more load-balanced.

FIG. 4 is a schematic structural diagram of an apparatus for allocating a hardware acceleration instruction to a memory controller according to an embodiment of the present invention. The apparatus is applied to a computer system, and the computer system includes multiple memory controllers that can execute hardware acceleration instructions. As shown in FIG. 4, the apparatus for allocating a hardware acceleration instruction to a memory controller includes: a division module 401, an obtaining module 402, an adjustment module 403, and an allocation module 404.

The division module 401 is configured to divide multiple hardware acceleration instructions into different instruction sets according to dependency relationships among the multiple hardware acceleration instructions.

Hardware acceleration instructions that belong to a same instruction set have a single-dependency relationship. The single-dependency relationship indicates that if input data of one hardware acceleration instruction in multiple hardware acceleration instructions is output data of another hardware acceleration instruction, the hardware acceleration instruction is singly dependent on the another hardware acceleration instruction.

The obtaining module 402 is configured to obtain a first mapping relationship between the instruction sets and the memory controllers in the computer system according to a rule that different instruction sets whose hardware acceleration instructions do not have a dependency relationship are allocated to different memory controllers.

The dependency relationship indicates that if input data of one hardware acceleration instruction in multiple hardware acceleration instructions is output data of another one or more hardware acceleration instructions, the hardware acceleration instruction is dependent on the another one or more hardware acceleration instructions. Memory controllers in the first mapping relationship compose a first memory controller set.

In this embodiment, the dependency relationship includes a single-dependency relationship and a multiple-dependency relationship. The multiple-dependency relationship indicates that if input data of one hardware acceleration instruction in multiple hardware acceleration instructions is output data of multiple other hardware acceleration instructions, the hardware acceleration instruction is multiply dependent on the multiple other hardware acceleration instructions.

The adjustment module 403 is configured to adjust the first mapping relationship according to load information of memory controllers in the first memory controller set, so as to obtain a second mapping relationship between the instruction sets and the memory controllers in the computer system.

Memory controllers in the second mapping relationship compose a second memory controller set. Load information of the memory controllers in the second memory controller set is not greater than a first preset threshold. The load information includes execution time slices of hardware acceleration instructions allocated to the memory controllers in the first memory controller set.

In this embodiment, the first preset threshold may be preset according to the load information of the memory controllers in the first memory controller set before the hardware acceleration instruction in the program is executed.

The allocation module 404 is configured to allocate hardware acceleration instructions in the instruction sets to the memory controllers in the second memory controller set according to the second mapping relationship.

Hardware acceleration instructions in a same instruction set are allocated to a same memory controller for execution.

The apparatus for allocating a hardware acceleration instruction to a memory controller in this embodiment may be configured to execute the technical solution in the method embodiment shown in FIG. 1. Implementation rules and technical effects of the apparatus are similar to those of the method, and details are not described herein.

Further, the adjustment module 403 is specifically configured to: when a proportion of a memory controller, in the first memory controller set, whose load information is greater than the first preset threshold is less than a second preset threshold, randomly allocate an instruction set that is in the first mapping relationship and allocated to the memory controller whose load information is greater than the first preset threshold, to another memory controller, in the computer system, whose load information is less than the first preset threshold, so as to obtain the second mapping relationship between the instruction sets and the memory controllers in the computer system.

Alternatively, the adjustment module 403 is specifically configured to: when a proportion of a memory controller, in the first memory controller set, whose load information is greater than the first preset threshold is not less than a second preset threshold, obtain a third memory controller set in the computer system, where load information of memory controllers in the third memory controller set is not greater than the first preset threshold; and obtain a second mapping relationship between the instruction sets and the memory controllers in the third memory controller set according to the rule that different instruction sets whose hardware acceleration instructions do not have a dependency relationship are allocated to different memory controllers.

Further, the obtaining module 402 is specifically configured to: if there are at least two memory controllers that match one instruction set, allocate the instruction set to a memory controller whose load information is the smallest in the at least two memory controllers that match the instruction set.

Further, an execution time slice of a hardware acceleration instruction in this embodiment is $latency_i(Fixed_i, Variable_i) = Fixed_i + Variable_i(\alpha_i * data_i / base\_granularity_i)$, $Fixed_i$ is a fixed execution time slice of the hardware acceleration instruction, $Variable_i$ is a variable execution time slice of the hardware acceleration instruction, $\alpha_i$ is a data execution rate of the hardware acceleration instruction, $data_i$ is a data amount of the hardware acceleration instruction, and $base\_granularity_i$ is a smallest data granularity of the hardware acceleration instruction.

Specifically, $Fixed_i$ is a fixed execution time slice of an $i^{th}$ hardware acceleration instruction, and indicates a time slice required for parsing and scheduling the hardware acceleration instruction. Because time slices for parsing and scheduling all hardware acceleration instructions are approximately equal, fixed execution time slices of all the hardware acceleration instructions are approximately equal. In this embodiment, the fixed execution time slices of all the hardware acceleration instructions may be set to a same value. Each hardware acceleration instruction has a different variable execution time. In this embodiment, a variable execution time slice $Variable_i$ of a hardware acceleration instruction is computed according to a data execution rate $\alpha_i$ of the hardware acceleration instruction, a data amount $data_i$ of the hardware acceleration instruction, and a smallest data granularity $base\_granularity_i$ of the hardware acceleration instruction.

Further, the apparatus for allocating a hardware acceleration instruction to a memory controller in this embodiment may be configured to execute the technical solution in the method embodiment shown in FIG. 3A and FIG. 3B. Implementation rules and technical effects of the apparatus are similar to those of the method, and details are not described herein.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, rather than limiting the present invention. The embodiments provided in this specification are merely examples. Persons skilled in the art may clearly know that, for convenience and conciseness of description, in the foregoing embodiments, the embodiments emphasize different aspects, and for a part not described in detail in one embodiment, reference may be made to relevant description of another embodiment. The embodiments of the present invention, claims, and features disclosed in the accompanying drawings may exist independently, or exist in a combination. Features described in a hardware form in the embodiments of the present invention may be executed by software, and vice versa. This is not limited herein.

**Claims**

1. A method for allocating a hardware acceleration instruction to a memory controller, wherein the method is applied to a computer system, the computer system comprises multiple memory controllers that can execute hardware acceleration instructions, and the method comprises:

   dividing multiple hardware acceleration instructions into different instruction sets according to dependency relationships among the multiple hardware acceleration instructions, wherein hardware acceleration instructions that belong to a same instruction set have a single-dependency relationship, and the single-dependency relationship indicates that if input data of one hardware acceleration instruction in the multiple hardware acceleration instructions is output data of another hardware acceleration instruction, the hardware acceleration instruction is singly dependent on the another hardware acceleration instruction;
   obtaining a first mapping relationship between the instruction sets and the memory controllers in the computer system according to a rule that different instruction sets whose hardware acceleration instructions do not have a dependency relationship are allocated to different memory controllers, wherein the dependency relationship indicates that if input data of one hardware acceleration instruction in the multiple hardware acceleration instructions is output data of another one or more hardware acceleration instructions, the hardware acceleration instruction is dependent on the another one or more hardware acceleration instructions, and memory controllers in the first mapping relationship compose a first memory controller set;

adjusting the first mapping relationship according to load information of the memory controllers in the first memory controller set, so as to obtain a second mapping relationship between the instruction sets and the memory controllers in the computer system, wherein memory controllers in the second mapping relationship compose a second memory controller set, load information of the memory controllers in the second memory controller set is not greater than a first preset threshold, and the load information comprises execution time slices of hardware acceleration instructions allocated to the memory controllers in the first memory controller set; and

allocating hardware acceleration instructions in the instruction sets to the memory controllers in the second memory controller set according to the second mapping relationship, wherein hardware acceleration instructions in a same instruction set are allocated to a same memory controller for execution.

2. The method according to claim 1, wherein the adjusting the first mapping relationship according to load information of the memory controllers in the first memory controller set, so as to obtain a second mapping relationship between the instruction sets and the memory controllers in the computer system specifically comprises:

when a proportion of a memory controller, in the first memory controller set, whose load information is greater than the first preset threshold is less than a second preset threshold, randomly allocating an instruction set that is in the first mapping relationship and allocated to the memory controller whose load information is greater than the first preset threshold, to another memory controller, in the computer system, whose load information is less than the first preset threshold, so as to obtain the second mapping relationship between the instruction sets and the memory controllers in the computer system.

3. The method according to claim 1, wherein the adjusting the first mapping relationship according to load information of the memory controllers in the first memory controller set, so as to obtain a second mapping relationship between the instruction sets and the memory controllers in the computer system specifically comprises:

when a proportion of a memory controller, in the first memory controller set, whose load information is greater than the first preset threshold is not less than a second preset threshold, obtaining a third memory controller set in the computer system, wherein load information of memory controllers in the third memory controller set is not greater than the first preset threshold; and

obtaining a second mapping relationship between the instruction sets and the memory controllers in the third memory controller set according to the rule that different instruction sets whose hardware acceleration instructions do not have a dependency relationship are allocated to different memory controllers.

4. The method according to any one of claims 1 to 3, wherein the obtaining a first mapping relationship between the instruction sets and the memory controllers in the computer system specifically comprises:

if there are at least two memory controllers that match one instruction set, allocating the instruction set to a memory controller whose load information is the smallest in the at least two memory controllers that match the instruction set.

5. The method according to any one of claims 1 to 3, wherein the execution time slice of the hardware acceleration instruction is $latency_i(Fixed_i, Variable_i) = Fixed_i + Variable_i(\alpha_i * data_i / base\_granularity_i)$, $Fixed_i$ is a fixed execution time slice of the hardware acceleration instruction, $Variable_i$ is a variable execution time slice of the hardware acceleration instruction, $\alpha_i$ is a data execution ratio of the hardware acceleration instruction, $data_i$ is a data amount of the hardware acceleration instruction, and $base\_granularity_i$ is a smallest data granularity of the hardware acceleration instruction.

6. An apparatus for allocating a hardware acceleration instruction to a memory controller, wherein the apparatus is applied to a computer system, the computer system comprises multiple memory controllers that can execute hardware acceleration instructions, and the apparatus comprises:

a division module, configured to divide multiple hardware acceleration instructions into different instruction sets according to dependency relationships among the multiple hardware acceleration instructions, wherein hardware acceleration instructions that belong to a same instruction set have a single-dependency relationship, and the single-dependency relationship indicates that if input data of one hardware acceleration instruction in the multiple hardware acceleration instructions is output data of another hardware acceleration instruction, the hardware acceleration instruction is singly dependent on the another hardware acceleration instruction;
an obtaining module, configured to obtain a first mapping relationship between the instruction sets and the memory controllers in the computer system according to a rule that different instruction sets whose hardware acceleration instructions do not have a dependency relationship are allocated to different memory controllers, wherein the dependency relationship indicates that if input data of one hardware acceleration instruction in the multiple hardware acceleration instructions is output data of another one or more hardware acceleration instructions, the hardware acceleration instruction is dependent on the another one or more hardware acceleration instructions, and memory controllers in the first mapping relationship compose a first memory controller set;
an adjustment module, configured to adjust the first mapping relationship according to load information of the memory controllers in the first memory controller set, so as to obtain a second mapping relationship between the instruction sets and the memory controllers in the computer system, wherein memory controllers in the second mapping relationship compose a second memory controller set, load information of the memory controllers in the second memory controller set is not greater than a first preset threshold, and the load information comprises execution time slices of hardware acceleration instructions allocated to the memory controllers in the first memory controller set; and
an allocation module, configured to allocate hardware acceleration instructions in the instruction sets to the memory controllers in the second memory controller set according to the second mapping relationship, wherein hardware acceleration instructions in a same instruction set are allocated to a same memory controller for execution.

7. The apparatus according to claim 6, wherein the adjustment module is specifically configured to:

when a proportion of a memory controller, in the first memory controller set, whose load information is greater than the first preset threshold is less than a second preset threshold, randomly allocate an instruction set that is in the first mapping relationship and allocated to the memory controller whose load information is greater than the first preset threshold, to another memory controller, in the computer system, whose load information is less than the first preset threshold, so as to obtain the second mapping relationship between the instruction sets and the memory controllers in the computer system.

8. The apparatus according to claim 6, wherein the adjustment module is specifically configured to:

when a proportion of a memory controller, in the first memory controller set, whose load information is greater than the first preset threshold is not less than a second preset threshold, obtain a third memory controller set in the computer system, wherein load information of memory controllers in the third memory controller set is not greater than the first preset threshold; and obtain a second mapping relationship between the instruction sets and the memory controllers in the third memory controller set according to the rule that different instruction sets whose hardware acceleration instructions do not have a dependency relationship are allocated to different memory controllers.

9. The apparatus according to any one of claims 6 to 8, wherein the obtaining module is specifically configured to:

if there are at least two memory controllers that match one instruction set, allocate the instruction set to a memory controller whose load information is the smallest in the at least two memory controllers that match the instruction set.

10. The apparatus according to any one of claims 6 to 8, wherein the execution time slice of the hardware acceleration instruction is $latency_i(Fixed_i, Variable_i) = Fixed_i + Variable_i(\alpha_i * data_i / base\_granularity_i)$, $Fixed_i$ is a fixed execution time slice of the hardware acceleration instruction, $Variable_i$ is a variable execution time slice of the hardware acceleration instruction, $\alpha_i$ is a data execution ratio of the hardware acceleration instruction, $data_i$ is a data amount of the hardware acceleration instruction, and $base\_granularity_i$ is a smallest data granularity of the hardware acceleration instruction.

Divide multiple hardware acceleration instructions into different instruction sets according to dependency relationships among the multiple hardware acceleration instructions ⟩ 101

Obtain a first mapping relationship between the instruction sets and memory controllers in a computer system according to a rule that different instruction sets whose hardware acceleration instructions do not have a dependency relationship are allocated to different memory controllers ⟩ 102

Adjust the first mapping relationship according to load information of memory controllers in a first memory controller set, so as to obtain a second mapping relationship between the instruction sets and the memory controllers in the computer system ⟩ 103

Allocate hardware acceleration instructions in the instruction sets to memory controllers in a second memory controller set according to the second mapping relationship ⟩ 104

FIG. 1

FIG. 2

Start

Divide multiple hardware acceleration instructions into different instruction sets according to dependency relationships among the multiple hardware acceleration instructions ⟩ 301

Obtain a first mapping relationship between the instruction sets and memory controllers in a computer system according to a rule that different instruction sets whose hardware acceleration instructions do not have a dependency relationship are allocated to different memory controllers, where memory controllers in the first mapping relationship compose a first memory controller set ⟩ 302

Determine whether a proportion of a memory controller, in the first memory controller set, whose load information is greater than a first preset threshold is less than a second preset threshold ⟩ 303

No                    Yes

TO                    TO
FIG. 3B               FIG. 3B

FIG. 3A

CONT.
FROM
FIG. 3A

CONT.
FROM
FIG. 3A

Obtain a third memory controller set in the computer system, where load information of memory controllers in the third memory controller set is not greater than the first preset threshold; and obtain a second mapping relationship between the instruction sets and the memory controllers in the third memory controller set according to the rule that different instruction sets whose hardware acceleration instructions do not have a dependency relationship are allocated to different memory controllers — 305

Randomly allocate an instruction set that in the first mapping relationship and allocated to the memory controller whose load information is greater than the first preset threshold, to another memory controller, in the computer system, whose load information is less than the first preset threshold, so as to obtain a second mapping relationship between the instruction sets and the memory controllers in the computer system — 304

Allocate hardware acceleration instructions in the instruction sets to memory controllers in a second memory controller set according to the second mapping relationship — 306

End

FIG. 3B

| Division module — 401 | Obtaining module — 402 | Adjustment module — 403 | Allocation module — 404 |

FIG. 4

# INTERNATIONAL SEARCH REPORT

| | International application No. |
|---|---|
| | PCT/CN2016/074450 |

## A. CLASSIFICATION OF SUBJECT MATTER

G06F 12/08 (2016.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, CNTXT: instruction?, memory, control+, distribut+, map+, threshold, load, hardware, accelerat+

## C. DOCUMENTS CONSIDERED TO BE RELEVANT

| Category* | Citation of document, with indication, where appropriate, of the relevant passages | Relevant to claim No. |
|---|---|---|
| A | CN 102043279 A (NITTO DENKO CORP.) 04 May 2011 (04.05.2011) see description, paragraph [0013], and claims 1-3 | 1-10 |
| A | CN 103345429 A (INST COMPUTING TECH CN ACADEMY) 09 October 2013 (09.10.2013) see the whole document | 1-10 |
| A | CN 102999443 A (GUANGZHOU YOUBEIDA INFORMATION TECHNOLOGY CO., LTD.) 27 March 2013 (27.03.2013) see the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 25 March 2016 | 04 May 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Huan<br><br>Telephone No. (86-10) 62411853 |

Form PCT/ISA /210 (second sheet) (July 2009)

## INTERNATIONAL SEARCH REPORT
### Information on patent family members

| | International application No. |
|---|---|
| | PCT/CN2016/074450 |

| Patent Documents referred in the Report | Publication Date | Patent Family | Publication Date |
|---|---|---|---|
| CN 102043729 A | 04 May 2011 | CN 102043729 B | 13 March 2013 |
| CN 103345429 A | 09 October 2013 | None | |
| CN 102999443 A | 27 March 2013 | CN 102999443 B | 09 September 2015 |

Form PCT/ISA/210 (patent family annex) (July 2009)